# EUROPÄISCHE PATENTSCHRIFT

(11) **EP 0 256 595 B1**
(45) Veröffentlichungstag und Bekanntmachung des Hinweises auf die Patenterteilung: **08.12.1993**
(21) Anmeldenummer: 87201487.3
(22) Anmeldetag: 05.08.1987
(51) Int. Cl.: H04L 7/02

(54) **Verfahren und Schaltungsanordnung zur Sicherstellung der Bitsynchronisation eines Datenblocks in einem Empfänger**
Method and circuit arrangement for assuring the bit synchronization of a data block in a receiver
Méthode et circuit pour assurer la synchronisation de bit d'un bloc de données dans un récepteur

(30) Priorität: 09.08.1986 DE 3627135
(43) Veröffentlichungstag der Anmeldung: 24.02.1988
(73) Patentinhaber: Philips Patentverwaltung GmbH, 22335 Hamburg (DE); Philips Electronics N.V., 5621 BA Eindhoven (NL)
(72) Erfinder: Tasto, Manfred, Ph. D., D-8560 Lauf/Peg. (DE); Ranner, Georg, Ing. grad., D-8560 Lauf/Peg. (DE); Bläsius, Rainer, Dipl.-Ing. (FH), D-8500 Nürnberg-Boxdorf (DE); Behr, Christian, Dipl.-Ing. (FH), D-8500 Nürnberg 50 (DE)
(74) Vertreter: Peuckert, Hermann, Dipl.-Ing.

(56) Entgegenhaltungen:
- EP-A- 0 165 498
- DE-A- 3 012 075
- FR-A- 2 283 592
- US-A- 4 189 622
- NACHRICHTENTECHNIK, Band 22, Nr. 6, Juni 1972, Seiten 197-199; W. GLASER: "ZurErkennung einer gerasterten in einer stochastischen Binärimpulsfolge"

## Beschreibung

Die Erfindung betrifft ein Verfahren zur Sicherstellung der Synchronisation eines Datenblocks in einem Empfänger gemäß dem Oberbegriff des Patentanspruchs 1.

In digitalen Nachrichtensystemen, die mit blockweiser Übertragung der Nachricht arbeiten, muß die Empfangseinrichtung auf die Sendeeinrichtung synchronisiert werden, damit ein für beide Einrichtungen gemeinsamer Startzeitpunkt festgelegt ist. Um eine Synchronisation der Empfangseinrichtung auf die Sendeeinrichtung vorzunehmen, kann in der Sendeeinrichtung ein bestimmtes Bitmuster erzeugt und dieses zur Empfangseinrichtung übertragen werden. Die Empfangseinrichtung leitet durch Korrelation des empfangenen Datensignals mit einem gespeicherten Datensignal ein Kriterium zur Feststellung des Startzeitpunktes ab.

Treten durch Störungen auf der Übertragungsstrecke, wie dies häufig beispielsweise bei Funkübertragungsstrecken der Fall ist, Bitfehler auf, welche zu relativ hohen Bitfehlerraten führen, so kann das empfangene Bitmuster nicht immer erkannt werden, wenn ein oder mehrere Bits des Bitmusters auf dem Übertragungsweg verfälscht wurden.

Ein solches Bitmuster, welches dem eigentlichen Datenblock vorangestellt ist, ist beispielsweise eine erste Bitfolge mit alternierenden Halbbits zur Ermittlung des Bittakts für die Bits des Datenblocks und eine zweite Bitfolge zur Ermittlung der Blocksynchronisation durch Korrelation mit der in der Empfangseinrichtung abgespeicherten Bitfolge.

Aus der DE-PS 22 19 016 ist ein Verfahren zur empfangsseitigen Phasensynchronisation auf die Phasenlage des Bittakts eines empfangenen Datenblocks bekannt, bei dem die Bitfolge, zur gleichzeitigen Ermittlung von Bittakt und Blocksynchronisation, N parallel liegenden Korrelatoren zugeführt wird, deren zugehörige Schieberegister mit zeitlich gegeneinander versetzten Schiebetaktimpulsfolgen fortgeschaltet werden.

Die Gewinnung des Bittakts und der Blocksynchronisation aus dem empfangenen Datensignal ist durch Einwirkung von Störspannungen, Einschwingvorgängen und Fading und den dadurch hervorgerufenen Phasenjitter erschwert, so daß die Phasensynchronisation relativ ungenau ist oder nicht innerhalb kürzester Zeit möglich ist. Weiterhin ist der Schaltungsaufwand bedingt durch die Korrelatorbank relativ hoch und die Festlegung des Zeitpunktes, zu dem die Korrelationssignale ausgewertet werden sollen, beispielsweise um Fehlsynchronisation durch Rauschen zu vermeiden, ist nicht ohne weiteres möglich.

Weiterhin ist aus der DE-OS 30 12 075 eine Schaltungsanordnung zur Bitsynchronisation bekannt, bei der ebenfalls der Bittakt aus dem empfangenen Datensignal abgeleitet wird. Hierzu ist der gesamte Phasenbereich des einzelnen Bits von 0 bis 360 Grad in Teilbitintervalle (sogenannte Phasenfenster) unterteilt. Während eines Messintervalls wird die Zahl des Auftretens von den den Teilbitintervallen zugeordneten Momentanphasenwerten gespeichert (Flankenzähler). Die Anzahl der Teilbitintervalle (Phasenfenster) wird von einer Teilerschaltung in Verbindung mit UND-Schaltungen bestimmt. Diese Einrichtungen erzeugen entsprechend dem Kehrwert der Anzahl von verschiedenen Phasenfenstern phasenverschobene Impulsfolgen.

Diesen Einrichtungen sind jeweils Zähler nachgeordnet, welche die Anzahl der Flanken des empfangenen Datensignals, welche in das jeweilige zugehörige Teilbitintervall (Phasenfenster) gefallen sind, zählen. Am Ende des Messintervalls wird die Phase des Bittakts um einen Phasenschätzwert entsprechend dem Phasenwert des Teilbitintervalls mit der größten Flankenzahl korrigiert.

Hierzu wird am Ende des Messintervalls den Zählern über eine Teilerschaltung und Umschaltern en höherer Bittakt zugeführt, wodurch das Hochzählen der Zähler beschleunigt wird. Infolge der phasenverschobenen Impulsfolgen erreicht zu einem bestimmten Zeitpunkt immer nur ein Zähler den Höchststand, und mittels einer nachgeschalteten Umcodierschaltung kann dem Zählerstand eine Binärzahl zugeordnet werden, welche in einem Speicher abgespeichert wird. Von einer Steuerlogik wird das Umschalten und Auslesen der gespeicherten Binärzahl, welche dem Teilbitintervall mit der größten Flankenzahl und somit dem phasensynchronen Bittakt entspricht, gesteuert und der Empfangsbittakt entsprechend dem Phasenschätzwert korrigiert.

Eine solche Schaltungsanordnung weist den Nachteil auf, daß infolge der Ableitung des Bittakts aus dem empfangenen Datensignal ein vorhandener Phasenjitter, d.h. die Schwankung der Kennzeitpunkte des Datensignals um die im Idealfall äquidistanten Zeitpunkte, sich bei der Bestimmung des Phasenschätzwerts auswirken. Insbesondere bei Funkübertragungsstrecken wird eine häufige Neusynchronisation erforderlich sein, da infolge von Fading die Bitfehlerrate unzulässig hohe Werte annehmen wird.

Der Erfindung liegt die Aufgabe zugrunde, ein Verfahren zur Sicherstellung der Bitsynchronisation eines Datenblocks derart anzugeben, daß Phasenschwankungen sich bei der Ermittlung des Bittakts nicht auswirken und daß das Verfahren auch bei unterschiedlich modulierten Datensignalen anwendbar ist.

Diese Aufgabe wird erfindungsgemäß durch ein Verfahren mit den Merkmalen des Patentanspruchs 1 gelöst.

Das erfindungsgemäße Verfahren weist im Vergleich zu den aus der DE-PS 22 19 016 bzw. DE-OS 30 12 075 bekannten Verfahren den Vorteil auf, daß es unabhängig von dem Modulationverfahren für die Datensignale ist. Im Vergleich zur Schaltungsanordnung gemäß der DE-OS 30 12 075 erfordert das erfindungsgemäße Verfahren einen geringen Schaltungsaufwand. Infolge der Ableitung des Bittakts durch Vergleich der ersten Bitfolge mit alternierenden Abtastwerten einer vorgebbaren Mindestanzahl während eines vorgebbaren Zeitintervalls,wirken sich durch Phasenjitter hervorgerufene Schwankungen bei der Ermittlung des Bittakts kaum aus. Während des Vergleichsvorgangs ist eine Verschiebung des vorgebbaren Zeitintervalls (Zeitfenster) durchführbar, so daß ein kurzzeitiger Takteinbruch nicht zum Abbruch des Synchronisationsvorganges führt.

Im Vergleich zu dem aus der DE-PS 22 19 016 bekannten Verfahren weist das erfindungsgemäße Verfahren den Vorteil auf, daß anhand des ermittelten Bittakts anschliessend eine Überprüfung des Bitsynchronismus mit der zweiten Bitfolge zur Ermittlung der Blocksynchronisation erfolgen kann.

Das Verfahren gemäß dem Patentanspruch 2 weist den Vorteil auf, daß durch die vorgenommene Bestimmung des Phasenmittelwerts eine Verschiebung des Abtastzeitpunkts in die Mittellage zwischen den Flanken der Bits des Datenblocks vorgenommen werden kann.

Die Schaltungsanordnung gemäß Patentanspruch 3 zur Durchführung des Verfahrens erfordert einen geringen Schaltungsaufwand und kann auf einfache Art und Weise integriert werden.

Die Erfindung wird im folgenden anhand einer in der Zeichnung dargestellten Ausführungsform näher beschrieben und erläutert. Es zeigt:
- Fig. 1: eine Ausführungsform zur Durchführung des erfindungsgemäßen Verfahrens,
- Fig. 2: bei störungsfreier Synchronisation und
- Fig. 3: bei einem gestörten Synchronisationsvorgang den zeitlichen Verlauf von Signalen für die in Fig. 1 dargestellte Ausführungsform.

Das erfindungsgemäße Verfahren wird für den Anwendungsfall bei einem schnurlosen Telefonapparat näher beschrieben und erläutert. In schnurlosen Telefonapparaten erfolgt die Informationsübertragung zwischen einer Basisstation und der zugehörigen Mobilstation über einen Funkkanal. Die Basisstation wird mittels einer Verbindungsdose an einen Hauptanschluß oder an eine Nebenstellenanlage angeschlossen, so daß für den Benutzer der Zugang zum öffentlichen Fernsprechnetz gegeben ist. Dadurch, daß die Basisstation und die Mobilstation über einen Funkkanal miteinander in Verbindung stehen, ist der Bewegungsbereich des Benutzers um einen Umkreis von etwa 200 Meter zum jeweiligen Anschluß erweitert.

In der Bundesrepublik Deutschland stehen für die Informationsübertragung 40 Funkkanäle zur Verfügung, welche im Frequenzbereich von 900 MHz liegen. Liegt ein Verbindungswunsch vor, so wird ein Suchlauf nach einem freien Funkübertragungskanal gestartet und belegt. In der Mobilstation wird die Funkkanalsuche durch Betätigen der Gabelumschalt-Taste eingeleitet. Um sicherzustellen, daß die zwischen Mobil- und Basisstation zu übertragenden Nachrichten von keinem anderen benachbarten schnurlosen Telefonapparat mitgehört werden können, bzw. um die Gebührenzuordnung sicherzustellen, weisen die beiden Stationen jeweils eine Codeeinrichtung auf, wobei der Code in der Mobilstation bzw. der Basisstation gerätefest und von der Anschlußnummer des Fernsprechteilnehmers unabhängig ist. Bei der Funkkanalsuche und dem dabei durchzuführenden Funkverbindungsaufbau wird ein Kennungsaustausch zwischen beiden Stationen durchgeführt.

Beim Verbindungsaufbau wird von einer der beiden Stationen ein als frei erkannter Funkübertragungskanal belegt, der Sender aktiviert und die Kennung als Datentelegramm über diesen Funkübertragungskanal gesendet. Nach jeder Ausgabe eines solchen Datentelegramms wird auf ein Quittungstelegramm der entsprechenden Gegenstation gewartet. Die gerufene Station sucht sämtliche Funkübertragungskanäle nach Datentelegrammen ab und sendet dann ein Quittungstelegramm zur rufenden Station zurück, wenn ein Datentelegramm mit einer Kennung empfangen wird, die mit der zugeordneten Kennung identisch ist.

Die vorgenannten Telegramme weisen verschiedene Bitfolgen auf, welche nacheinander gesendet werden. Eine erste Bitfolge mit alternierenden Halbbits besteht beispielsweise aus 16 Bits und dient zur Ermittlung des Bittakts in den Stationen. Zeitlich nachfolgend wird eine zweite Bitfolge zur Ermittlung der Blocksynchronisation gesendet, welche beispielsweise 8 Bit lang ist und als Informationsinhalt die Kanalnummer trägt. Durch die Verwendung der Kanalnummer zur Blocksynchronisation wird der Beginn des nachfolgenden Datenblocks erkannt und andererseits vermieden, daß bei günstigen Feldstärkeverhältnissen die Empfangsstation auf einen Nachbarkanal mit ausreichendem Feldstärkepegel aufrastet. Der Datenblock umfaßt beispielsweise 20 Bits und enthält beispielsweise während des Funkverbindungsaufbaus die Kennung. An diesen Datenblock kann sich weiterhin ein Prüfteil zeitlich nachfolgend anschließen, welcher zur Erkennung und Korrektur von Bitverfälschungen innerhalb der Nutzinformation dient, wozu beispielsweise für die 12 Bits des Prüfteils ein Matrix-Parity-Check-Verfahren angewandt werden kann.

Während des Gesprächszustands kann ein unhörbarer Kennungsaustausch zwischen den beiden Stationen vorgenommen werden, wobei das Telegramm als nichthörbare Außerband-Signalisierung übertragen wird. Da das Datentelegramm, wie bereits ausgeführt, die erste Bitfolge enthält, ist auch während des Gesprächs die Bitsynchronisation sichergestellt.

Die Bitsynchronisation kann auch mittels eines jeweils in Basis- und Mobilstation des schnurlosen Telefonapparats angeordneten programmgesteuerten Steuereinrichtung durchgeführt werden.

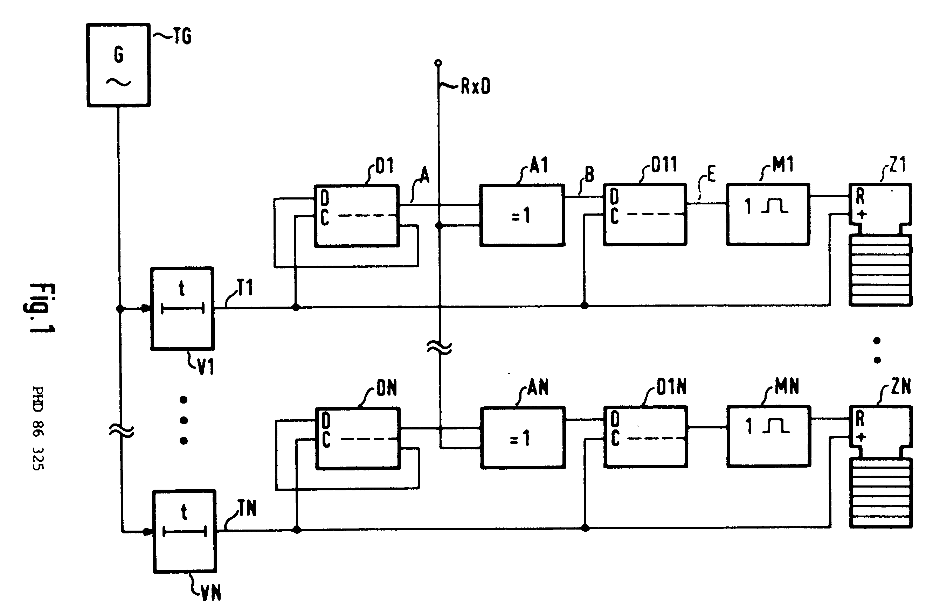

Anhand der in Fig. 1 dargestellten Ausführungsform für die Steuereinrichtung wird das erfindungsgemäße Verfahren näher beschrieben und erläutert, wobei die für das Verständnis der Erfindung nicht erforderlichen Teile in den beiden Stationen zeichnerisch nicht dargestellt worden sind.

Der Takt eines Taktgenerators TG wird N parallel angeordneten Verzögerungsgliedern V1, ..., VN zugeführt. Als Taktgenerator kann auch der interne Takt eines in den beiden Stationen angeordneten Mikroprozessors verwendet werden. Die Ausgänge der Verzögerungsglieder V1, ..., VN sind jeweils dem Takteingang eines ersten D-Kippglieds D1, ... , DN verbunden. Der Dateneingang dieser ersten D-Kippglieder D1, ..., DN ist jeweils an den invertierenden Ausgang angeschlossen. Die nichtinvertierenden Ausgänge der ersten D-Kippglieder D1, ..., DN sind jeweils mit einem ersten Eingang eines Antivalenzglieds A1, ..., AN verbunden. Dem zweiten Eingang jedes der Antivalenzglieder A1, ..., AN wird das Telegramm zugeführt. Die Ausgänge der Antivalenzglieder A1, ..., AN sind jeweils mit dem Dateneingang eines zweiten D-Kippglieds D11, ..., D1N verbunden, an dessen Takteingang jeweils der Ausgang des Verzögerungsglieds V1, ..., VN angeschlossen ist. Der Ausgang jedes der zweiten D-Kippglieder D11, ..., D1N ist sowohl mit dem invertierenden als auch dem nichtinvertierenden Eingang eines monostabilen Kippglieds M1, ..., MN verbunden. Der Ausgang jedes der monostabilen Kippglieder M1, ..., MN ist an den Reset-Eingang eines Zählers Z1, ..., ZN angeschlossen. Der Takteingang jedes Zählers Z1, ..., ZN ist mit dem Ausgang des im zugeordneten Verzögerungsglieds V1, ..., VN verbunden.

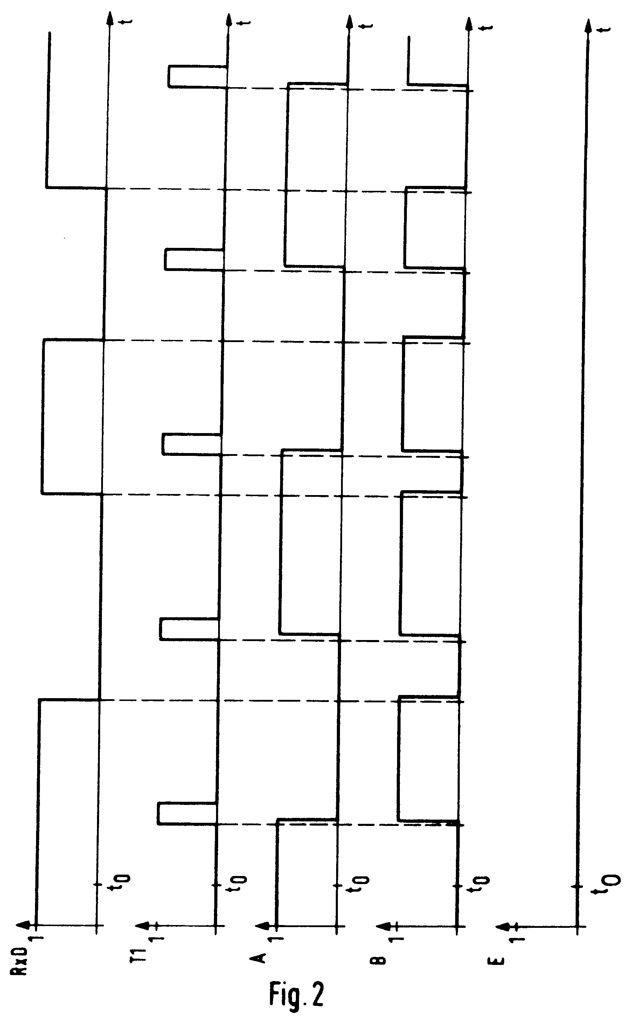

Die Funktionsweise der Schaltungsanordnung nach Fig. 1 wird im folgenden anhand der in Fig. 2 dargestellten zeitlichen Verläufe näher beschrieben und erläutert. Zum Zeitpunkt t_{O} befindet sich jedes der ersten D-Kippglieder D1, ..., DN im 1-Zustand. Die ersten D-Kippglieder D1, ..., DN führen eine Teilung im Verhältnis 1:2 des am Ausgang der Verzögerungsglieder V1, ..., VN anstehenden phasenverschobenen Takts T1, ..., TN durch. Das Signal A am Ausgang der ersten D-Kippglieder D1, ..., DN gibt den erwarteten Zustand des Digitalsignals RxD vor.

Im Antivalenzglied A1, ..., AN wird dieser erwartete Zustand des Signals A mit dem tatsächlichen Zustand des Digitalsignals RxD verglichen und das Signal B am Ausgang des Antivalenzglieds A1, ..., AN befindet sich nur dann im 1-Zustand, wenn für eines der beiden Signale A bzw. RxD der 1-Zustand feststellbar ist.

Mittels des zweiten D-Kippglieds D11, .., D1N wird dieser Vergleich auf den Flankenzeitpunkt des Taktsignals T am Ausgang der Verzögerungsglieder V1, ..., VN festgelegt. Weist das Signal E am Ausgang der zweiten D-Kippglieder D11, ..., D1N während des vorgebbaren Zeitintervalls (Meßintervall) einen konstanten Kennzustand auf, so wird das monostabile Kippglied M1, ... MN nicht getriggert und der Zähler Z1, ..., ZN zählt hoch.

Da die Synchronisierbits (erste Bitfolge) in der Bitmitte jeweils einen Flankenwechsel aufweisen, wird unabhängig von der Phasenlage der Abtastimpulse des Takts T1, ..., TN während der Abtastung der ersten Bitfolge jeweils eine bestimmte Anzahl von 1-Abtastwerten und 0-Abtastwerten auftreten. Die Zahl der Abtastwert-Wechsel wird mit den Zählern Z1, ..., ZN gezählt und sobald einer dieser Zähler Z1, ..., ZN die vorgebbare Mindestanzahl feststellt wird dieser Takt als phasensychroner Takt genommen.

Wird beispielsweise die Abtastung der ersten Bitfolge mit drei phasenverschobenen Takten T1, ..., T3 gleicher Taktfrequenz vorgenommen und die Phasenlage des einen Takts fällt mit der Halbbitflanke des Synchronisierbits zusammen, so wird dieser Takt nicht die Anforderung der alternierenden 0/1-Folge erfüllen und deshalb nicht als phasensynchroner Bittakt genommen. Dagegen liegen die beiden anderen Takte mit einem Abstand von 60 Grad zur Halbbit-Flanke des Synchronisierbits entfernt, wodurch einer der beiden Takte als phasensynchroner Bittakt genommen werden kann.

Erreicht einer der Zähler Z1, ..., ZN die vorgebbare Mindestanzahl, so können die aktuellen Zählerstände der anderen Zähler überprüft werden. Für den Fall dreier Zähler Z1, Z2, Z3 können dabei unterschiedliche Fälle auftreten.

Aufgrund der aktuellen Zählerstände ist anzunehmen, daß kurze Zeit später die beiden anderen Zähler die vorgebbare Mindestanzahl überschreiten, so daß jeder der drei Takte als phasensynchroner Bittakt genommen werden kann. Eine weitere Verbesserung der Phasenlage ist ohne Änderung des erfindungsgemäßen Verfahrens durchführbar.

Ist nur für einen der beiden Zähler zu erwarten, daß kurze Zeit später die vorgebbare Mindestanzahl erreicht wird, so kann zur Verbesserung der Phasenlage aus den Taktphasen der Phasenmittelwert zwischen den beiden Takten bestimmt werden und der Takt mit dem Phasenmittelwert als phasensynchroner Bittakt genommen werden. Ist zu erwarten, daß keiner der beiden Zähler die vorgebbare Mindestanzahl erreicht, so wird der dem ersten Zähler zugeordnete Bittakt als phasensynchroner Bittakt genommen.

Liegt beispielsweise die Anzahl der Synchronisierbits bei 16, so kann die Mindestanzahl der in ununterbrochender Reihenfolge auftretenden 0/1-Folge auf 25 festgelegt werden.

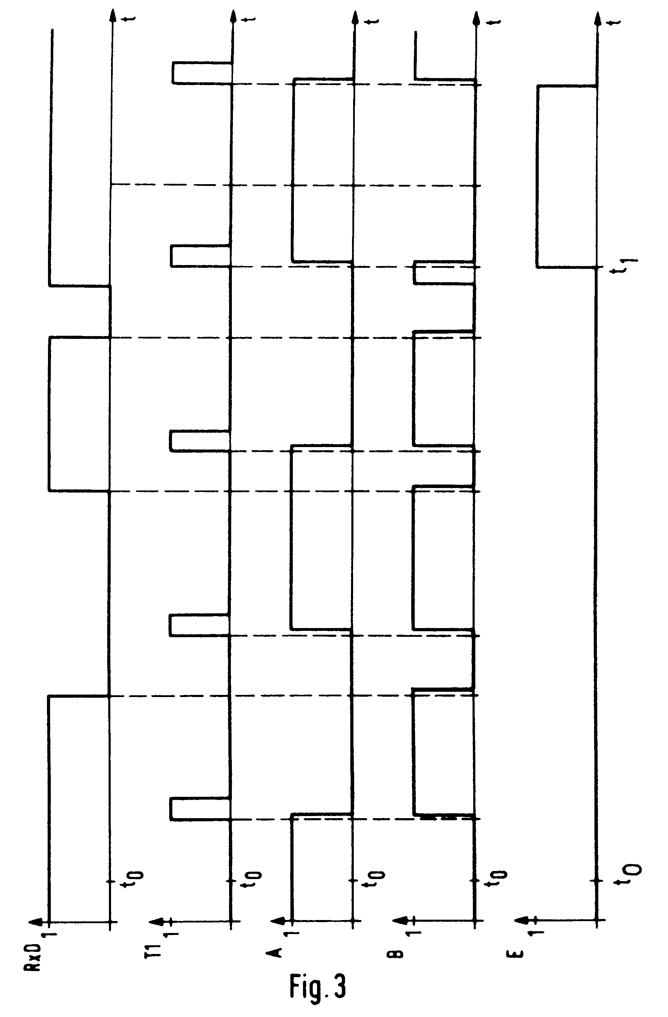

In Fig. 3 ist der Synchronisationsvorgang für den Fall einer Störung dargestellt. Zum Zeitpunkt t₁ tritt eine Störung dahingehend auf, daß das "erwartete" und das empfangene Signal A bzw. RxD unterschiedliche Kennzustände aufweisen. Das Signal E geht in den 1-Kennzustand über, wodurch beispielsweise das monostabile Kippglied M1 getriggert und der Zähler Z1 zurückgesetzt wird. Erreicht der Zähler Z1 während des Meßintervalls den vorgebbaren Zählerstand, so kann trotz der Störung der dem Zähler Z1 zugeordnete Bittakt als phasensynchroner Bittakt genommen werden.

Das erfindungsgemäße Synchronisationsverfahren kann auch dann angewendet werden, wenn die Kennzustände des "erwarteten" Signals A und des empfangenen Digitalsignals RxD während des vorgebbaren Zeitintervalls (Meßintervall) stets antivalent sind.

Wird der Takt aus dem internen Takt eines Mikroprozessors (programmgesteuerte Steuereinrichtung) abgeleitet, so beträgt der Minimalabstand aufeinanderfolgender Interrupts für 32 Taktzyklen zu je 2,5 µsec und Verwendung eines 6 MHz-Quarzes 80 µsec. Dieser Interruptabstand von 80 µsec wird aus verarbeitungstechnischen Gründen auf das doppelte verlängert und mit diesem Takt wird die Abtastung des Telegramms vorgenommen. Um eine Unterteilung des Phasenbereichs in ein Phasenintervall (Teilbitintervall) von 60 Grad zu erreichen, sind mindestens 3 Takte erforderlich, welche über den Phasenbereich des Bits gleichmäßig verteilt werden. Die Bitlänge der Synchronisierbits ergibt sich hierbei zu 960 µsec.

## Patentansprüche

1. Verfahren zur Sicherstellung der Bitsynchronisation eines Datenblocks in einem Empfänger, wobei vor dem Datenblock und zeitlich nacheinander gesendet werden eine erste Bitfolge mit alternierender 0/1-Folge zur Ermittlung des Bittakts für die Bits des Datenblocks und eine zweite Bitfolge zur Ermittlung der Blocksynchronisation durch Korrelation mit einer im Empfänger gespeicherten Bitfolge, dadurch gekennzeichnet, daß die erste Bitfolge mit N phasenverschobenen, empfangsseitig erzeugten Takten (T1, ..., TN) gleicher Taktfrequenz abgetastet wird, wodurch der gesamte Phasenbereich der einzelnen Bits in Teilbitintervalle unterteilt wird, und daß als phasensynchroner Bittakt jener Takt (T1, ..., TN) genommen wird, für den die Zahl der Abtastwert-Wechsel der ersten Bitfolge während eines vorgebbaren Zeitintervalls mit einer vorgebbaren Mindestanzahl feststellbar sind.

2. Verfahren nach Anspruch 1, dadurch gekennzeichnet, daß für Takte (T1, ..., TN) mit gleicher Anzahl an Abtastwert-Wechsel ein Phasenmittelwert aus den Taktphasen bestimmt wird und der Takt mit dem Phasenmittelwert als phasensynchroner Bittakt genommen wird.

3. Empfänger mit einer Schaltungsanordnung zur Bitsynchronisation eines Eingangssignals (RxD), welches mindestens einen Datenblock enthält, wobei im Empfänger folgende Mittel vorgesehen sind:
- Mittel (TG, V1, ... VN) zur Erzeugung von n phasenverschobenen Takten gleicher Taktfrequenz zur Abtastung des Eingangssignals (RxD)
- Mittel (Z1 ... ZN) zur Zählung eines bestimmten Abtastzustandes für jeden der n phasenverschoben abgetasteten Eingangssignale
- Mittel zur Auswertung der Zählmittel zur Ermittelung des für die Abtastung eines Datenblockes am geeignetsten phasenverschobenen Taktes
dadurch gekennzeichnet,
- daß die Mittel (TG, V1, ... VN)), die zur Erzeugung der n Taktfrequenzen vorgesehen sind, diesen Takt unabhängig von dem Takt des Eingangssignals erzeugen, und
- daß weitere Mittel (D1 ... DN, A1 ... AN, D11 ... D11N) vorgesehen sind, die nur dann das jeweilige Zählmittel (Z1 ... ZN) inkrementieren, wenn für das betreffende abgetastete Einganssignal von einem Abtastzeitpunkt zum nächsten Abtastzeitpunkt ein Wechsel des Abtastzustandes festgestellt werden konnte.

4. Empfänger nach Anspruch 3,
dadurch gekennzeichnet,
- daß die Mittel zur Auswertung der Zählmittel (Z1 ... ZN) dazu vorgesehen sind, bei einer Mehrzahl von als gleichermaßen geeignet ausgwerteten Taktsignalen einen Mittelwert aus diesen Taktsignalen zu bestimmen, und
- daß Mittel vorgesehen sind, die zur Abtastung des Datenblockes einen Takt zu erzeugen, dessen Phasenverschiebung diesem gemittelten Taktsignal entspricht.

5. Empfänger nach Anspruch 3,
dadurch gekennzeichnet,
- daß der Takt eines Taktgenerators (TG) n parallel angeordneten Verzögerungsgliedern (V1, ..., VN) zugeführt wird,
- daß die Ausgänge der Verzögerungsglieder (V1, ..., VN) jeweils mit dem Takteingang eines ersten D-Kippglieds (D1, ..., DN) verbunden sind, an dessen Dateneingang der invertierende Ausgang angeschlossen ist,
- daß der nichtinvertierende Ausgang des ersten D-Kippglieds (D1, ..., DN) jeweils mit einem ersten Eingang eines Antivalenzglieds (A1, ..., AN) verbunden ist, wobei den zweiten Eingängen der Antivalenzglieds (A1, ..., AN) verbunden ist, wobei den zweiten Eingängen der Antivalenzglieder (A1, ..., AN) das Digitalsignal (RxD) zugeführt wird,
- daß der Ausgang jedes Antivalenzglieds (A1, ..., AN) mit dem Dateneingang eines zweiten D-Kippglieds (D11, ..., D1N) verbunden ist, an dessen Takteingang jeweils der Ausgang des Verzögerungsglieds (V1, ..., VN) angeschlossen ist, daß der Ausgang jedes der zweiten D-Kippglieder (D11, ..., D1N) mit dem Eingang eines monostabilen Kipglieds (M1, ..., MN) verbunden ist, dessen Ausgang an den Reset-Eingang eines Zählers (Z1, ..., ZN) angeschlossen ist und der Takteingang jedes Zählers (Z1, ..., ZN) mit dem Ausgang des Verzögerungsglieds (V1, ..., VN) verbunden ist und
- daß anhand der Zählerstände der Zähler (Z1, ..., ZN) die Auswahl des phasensynchronen Bittakts vorgenommen wird.

6. Empfänger nach Anspruch 3, 4 oder 5,
dadurch gekennzeichnet,
daß mittels einer sowohl in Basis- als auch in zugehöriger Mobilstation eines schnurlosen Telefonapparates angeordneten programmgesteuerten Steuereinrichtung die Bitsynchronisation durchgeführt wird.

## Claims

1. Method of ensuring bit synchronization of a data block in a receiver, according to which method there are transmitted consecutively and prior to the data block: a first bit sequence of alternating "0" and "1" levels for determining the bit clock for the bits of a data block and a second bit sequence for determining the block synchronization by correlation with a bit sequence stored in the receiver, characterized in that the first bit sequence is sampled with N phase-shifted clocks (T1, ..., TN) of equal clock frequency that are generated in the receiver, whereby the overall phase range of the individual bit intervals is divided into sub-intervals, and in that such clock (T1, ..., TN) is utilized as the phase-synchronous bit clock, for which the number of changes of sample values the first bit sequence can be established as having a predetermined minimum value during a predetermined time-interval.

2. Method as claimed in Claim 1, characterized in that for clocks (T1, ..., TN) having the same number of changes of sample values a mean phase value is determined from the clock phases and the clock having the mean phase value is utilized as the phase-synchronous bit clock.

3. Receiver comprising a circuit arrangement for bit synchronization of an input signal (RxD), which signal contains at least a data block, the following means being included in the receiver:
- means (TG, V1, ..., VN) for producing n phase-shifted clock signals having the same clock frequency, for sampling the input signal (RxD)
- means (Z1, ..., ZN) for counting a specific sampling state for each of the n phase-shifted sampled input signals
- means for evaluating the counting means for determining the phase-shifted clock signal which is the most suitable for sampling a data block,
characterized
- in that the means (TG, V1, ..., VN), provided for producing the n clock frequencies, produce this clock signal independently of the input signal clock, and
- in that further means (D1, ..., DN, A1, ..., AN, D11, ..., D11N) are provided, which do not increment the associated counting means (Z1, ..., ZN) until a change of the sampling state can be detected between one sampling instant and the next for the associated sampled input signal.

4. Receiver as claimed in Claim 3, characterized
- in that the means for evaluating the counting means (Z1, ..., ZN) are provided for the purpose of determining a mean value from a plurality of clock signals that have been found to be equally suitable, and
- in that means are provided which produce a clock signal for sampling the data block, whose phase shift corresponds to this mean clock signal.

5. Receiver as claimed in Claim 3, characterized
- in that the clock of a clock generator (TG) is applied to n delay elements (V1, ..., VN) arranged in parallel,
- in that the outputs of the delay elements (V1, ..., VN) are connected each to the clock input of a first D flip-flop (D1, ..., DN), to whose data input the inverting output is connected,
- in that the non-inverting output of each first D flip-flop (D1, ..., DN) is connected to a first input of an Exclusive-Or circuit (A1, ..., AN) while the second input of each Exclusive-Or circuit (A1, ..., AN) is supplied with the digital signal (RxD),
- in that the output of each Exclusive-Or circuit (A1, ..., AN) is connected to a data input of a second D flip-flop (D11, ..., D1N) to whose clock input the output of the delay element (V1, ..., VN) is connected,
- in that the output of each of the second D flip-flops (D11, ..., D1N) is connected to the input of a monostable flip-flop (M1, ..., MN) whose output is connected to the reset input of a counter (Z1, ..., ZN) and the clock input of each counter (Z1, ..., ZN) is connected to the output of the delay element V1, ..., VN), and
- in that the phase-synchronous bit clock is selected on the basis of the counts of the counters (Z1, ..., ZN).

6. Receiver as claimed in Claim 3, 4 or 5, characterized in that the bit synchronization is effected by means of a program-controlled controller provided in both the base station and the associated mobile station of a cordless telephone set.

## Revendications

1. Procédé permettant d'assurer la synchronisation de bits d'un bloc de données dans un récepteur, étant entendu qu'avant le bloc de données et consécutivement dans le temps, sont émises une première séquence de bits avec une succession de 0/1 alternée pour déterminer le rythme binaire pour les bits du bloc de données et une seconde séquence binaire pour déterminer la synchronisation des blocs par corrélation avec une séquence binaire mémorisée dans le récepteur, caractérisé en ce que la première séquence binaire est échantillonnée avec N rythmes (T1, ..., TN) de même fréquence produits côté récepteur et déphasés, de sorte que la totalité du domaine de phase des bits individuels est divisée en intervalles de bits partiels et l'on prend comme rythme binaire synchrone en phase tout rythme (T1, ..., TN) pour lequel le nombre de changements de valeurs d'échantillonnage de la première séquence binaire peut être fixé par un nombre minimum prédéterminable au cours d'un intervalle de temps prédéterminable.

2. Procédé selon la revendication 1, caractérisé en ce que, pour les rythmes (T1, ..., TN) de même nombre de changements de valeurs d'échantillonnage, on détermine à partir des phases de rythme une moyenne de phase et on prend comme rythme binaire synchrone en phase le rythme avec la moyenne de phase.

3. Récepteur pourvu d'un montage de circuit pour la synchronisation de bits d'un signal d'entrée (RxD), qui contient au minimum un bloc de données, les moyens suivants étant prévus dans le récepteur :
- des moyens (TG, V1, ..., VN) pour produire n rythmes déphasés de même fréquence pour échantillonner le signal d'entrée (RxD);
- des moyens (Z1, ..., ZN) pour compter un état d'échantillonnage déterminé pour chacun des n signaux d'entrée échantillonnés déphasé, et
- des moyens pour évaluer la moyenne de comptage afin de déterminer le rythme déphasé convenant le mieux à l'échantillonnage d'un bloc de données, caractérisé en ce que :
- les moyens (TG, V1, ..., VN), qui sont prévus pour la production des n fréquences de rythme, produisent ce rythme indépendamment du rythme du signal d'entrée, et
- d'autres moyens (D1, ..., DN, A1, ... AN, D11, ..., D11N) sont prévus, qui n'incrémentent les moyens de comptage respectifs (Z1, ..., ZN) que lorsque on a pu établir un changement de l'état d'échantillonnage pour le signal d'entrée échantillonné en question d'un instant d'échantillonnage à l'instant d'échantillonnage suivant.

4. Récepteur selon la revendication 3,
caractérisé en ce que :
- les moyens d'évaluation de la moyenne de comptage (Z1, ..., ZN) sont prévus pour déterminer, dans le cas d'une série de signaux de rythme évalués comme pareillement adéquats, une valeur moyenne à partir de ces signaux de rythme, et
- des moyens sont prévus pour produire, pour l'échantillonnage du bloc de données, un rythme dont le déphasage correspond à ce signal de rythme moyen.

5. Récepteur selon la revendication 3, caractérisé en ce que :
- le rythme d'un générateur de rythme (TG) est acheminé à n éléments de temporisation (V1, ..., VN) montés en parallèle;
- les sorties des éléments de temporisation (V1, ..., VN) sont respectivement connectées à l'entrée de rythme d'une première bascule D (D1, ..., DN), à l'entrée de données de laquelle la sortie inverseuse est connectée;
- la sortie non inverseuse de la première bascule D (D1, ..., DN) est connectée respectivement à une première entrée d'un élément OU exclusif (A1, ..., AN), le signal numérique (RxD) étant acheminé aux secondes entrées des éléments OU exclusifs (A1, ..., AN);
- la sortie de chaque élément OU exclusif (A1, ..., AN) est connectée à l'entrée de données d'une seconde bascule D (D11, ..., D1N) à l'entrée de rythme de laquelle est connectée respectivement la sortie de l'élément de temporisation (V1, ..., VN);
- la sortie de chacune des deuxièmes bascules D (D11, ..., D1N) est connectée à l'entrée d'une bascule monostable (M1, ..., MN) dont la sortie est connectée à l'entrée de remise à zéro d'un compteur (Z1, ..., ZN) et l'entrée de rythme de chaque compteur (Z1, ..., ZN) est connectée à la sortie de l'élément de temporisation (V1, ..., VN), et
- en fonction des états de comptage des compteurs (Z1, ..., ZN), on effectue le choix du rythme binaire synchrone en phase.

6. Récepteur selon la revendication 3, 4 ou 5, caractérisé en ce qu'on réalise la synchronisation des bits à l'aide d'un dispositif de commande contrôlé par programme et installé dans la station de base et dans la station qui lui est affectée d'un appareil téléphonique sans cordon.
